# EUROPEAN PATENT APPLICATION

(11) **EP 2 922 301 A1**
(43) Date of publication of application: **23.09.2015**
(21) Application number: 15160127.5
(22) Date of filing: 20.03.2015
(51) Int. Cl.: H04N 21/258, H04L 12/28, H04N 21/262, H04N 21/438, H04N 21/6543

(54) **Remote control method for smart television and related apparatus**

(30) Priority: 20.03.2014 CN 201410105560
(71) Applicant: Xiaomi Inc., Beijing 100085 (CN)
(72) Inventor: Liu, Huadong, 100085 Beijing (CN); Zhang, Jun, 100085 Beijing (CN); Ru, Yi, 100085 Beijing (CN)
(74) Representative: Robson, Aidan John

(57) **Abstract**

A remote control method for a smart television and a related apparatus are provided. The method obtains a playing task customized by a user via a server, and the playing task includes at least a playing source. Then, the server obtains a playing instruction corresponding to the playing task and sends the playing instruction to the smart television. The smart television obtains a source file corresponding to the playing source after receiving the playing instruction and plays the source file. Finally, the user can control the smart television to play the predetermined program at the predetermined time remotely.

## Description

### FIELD

The present disclosure generally relate to a remote control technology, and more particularly, to a remote control method for a smart television and related apparatus.

### BACKGROUND

With the development of the communication technology, the smart television has been popularized. Compared with the conventional radio and television, the smart television has many great changes in operations and contents.

A user can search and select a program to be played in a server and further control the smart television to play the program. However, for the old who have been used to the conventional radio and television, it is difficult to get used to the complex operation (such as searching, selecting and playing) of the smart television. They usually do not know how to operate the smart television to play their interested program. Therefore, a method for remotely controlling the smart television to play a predetermined program at a predetermined time is needed.

### SUMMARY

According to a first aspect of embodiments of the present disclosure, a remote control method for a smart television is provided, including: obtaining a playing task customized by a user, in which the playing task comprises at least a playing source; determining the smart television corresponding to the playing task; and obtaining a playing instruction corresponding to the playing task and sending the playing instruction to the smart television, in which the playing instruction is configured to control the smart television to obtain a source file corresponding to the playing source and to play the source file.

With respect to the first aspect, in a first possible embodiment of the first aspect, obtaining a playing instruction corresponding to the playing task includes: receiving a triggering operation of the user for activating the playing task; and generating the playing instruction corresponding to the playing task according to the triggering operation.

With respect to the first aspect, in a second possible embodiment of the first aspect, the playing task comprises a playing time and the playing source; and obtaining a playing instruction corresponding to the playing task includes: performing a timing management on the playing task according to the playing time in the playing task; and generating the playing instruction corresponding to the playing task according to the playing task when the playing time expires.

With respect to the first aspect, in a third possible embodiment of the first aspect, the smart television is connected to a server via a home gateway; and determining the smart television corresponding to the playing task includes: obtaining an account to which the playing task is bound, in which each account corresponds to one home gateway; querying a predetermined correspondence between the account and the home gateway to obtain the home gateway corresponding to the account to which the playing task is bound; and determining a smart television connected with the home gateway as the smart television corresponding to the playing task.

According to a second aspect of embodiments of the present disclosure, a remote control method for a smart television is provide, including: receiving a playing instruction generated by a server according to an obtained playing task, in which the playing instruction comprises a playing source; obtaining a source file corresponding to the playing source according to the playing instruction; and playing the source file.

With respect to the second aspect, in a first possible embodiment of the second aspect, the method further includes: receiving a boot instruction from a home gateway, in which the boot instruction is generated by the home gateway when receiving the playing instruction from the server and determining that the smart television is in a standby status; and switching the smart television from the standby status to a power-on status according to the boot instruction.

With respect to the second aspect or the first possible embodiment of the first aspect, in a second possible embodiment of the second aspect, the playing instruction comprises a playing time and the playing source, and the method further includes: determining whether the playing time expires; executing a step of obtaining the source file corresponding to the playing source according to the playing instruction if the playing time expires.

According to a third aspect of embodiments of the present disclosure, a remote control method for a smart television is provide, including: receiving a playing instruction from a server; determining whether the smart television is in a power-on status or a standby status; sending a boot instruction to the smart television if the smart television is in the standby status, in which the boot instruction is configured to control the smart television to switch to the power-on status from the standby status; and transmitting the playing instruction to the smart television, in which the playing instruction comprises a playing time and a playing source.

Embodiments of a fourth aspect of the present disclosure provide a remote control apparatus for a smart television, including: a first obtaining unit, configured to obtain a playing task customized by a user, in which the playing task comprises at least a playing source; a determining unit, configured to determine the smart television corresponding to the playing task; a second obtaining unit, configured to obtain a playing instruction corresponding to the playing task; and a sending unit, configured to send the playing instruction to the smart television, in which the playing instruction is configured to control the smart television to obtain a source file corresponding to the playing source and to play the source file.

With respect to the fourth aspect, in a first possible embodiment of the fourth aspect, the second obtaining unit includes: a receiving sub-unit, configured to receive a triggering operation of the user for activating the playing task; and a first instruction generating sub-unit, configured to generate the playing instruction corresponding to the playing task according to the triggering operation.

With respect to the fourth aspect, in a second possible embodiment of the fourth aspect, the playing task comprises a playing time and the playing source, and the second obtaining unit includes: a timing sub-unit, configured to perform a timing management on the playing task according to the playing time in the playing task; and a second instruction generating sub-unit, configured to generate the playing instruction corresponding to the playing task according to the playing task when the playing time expires.

With respect to the fourth aspect, in a third possible embodiment of the fourth aspect, the smart television is connected to the server via a home gateway, and the determining unit includes: a first obtaining sub-unit, configured to obtain an account to which the playing task is bound, in which each account corresponds to one home gateway; a querying sub-unit, configured to query a predetermined correspondence between the account and the home gateway to obtain the home gateway corresponding to the account to which the playing task is bound; and a first determining sub-unit, configured to determine a smart television connected with the home gateway as the smart television corresponding to the playing task.

According to a fifth aspect of embodiments of the present disclosure, a remote control apparatus for a smart television is provided provide, including: a first receiving unit, configured to receive a playing instruction generated by a server according to an obtained playing task, in which the playing instruction comprises a playing source; an obtaining unit, configured to obtain a source file corresponding to the playing source according to the playing instruction; and a playing control unit, configured to play the source file.

With respect to the fifth aspect, in a first possible embodiment of the fifth aspect, the apparatus further includes: a second receiving unit, configured to receive a boot instruction from a home gateway, in which the boot instruction is generated by the home gateway when receiving the playing instruction from the server and determining that the smart television is in a standby status; and a status switching unit, configured to switch the smart television from the standby status to a power-on status according to the boot instruction.

With respect to the fifth aspect or the first possible embodiment of the fifth aspect, in a second embodiment of the fifth aspect, the apparatus further includes: a determining unit, configured to determine whether the playing time expires; and the obtaining unit is configured to obtain the source file corresponding to the playing source according to the playing instruction if the playing time expires.

According to a sixth aspect of embodiments of the present disclosure, a remote control apparatus for a smart television is provided, including: a receiving unit, configured to receive a playing instruction from a server; a determining unit, configured to determine whether the smart television is in a power-on status or a standby status; a first sending unit, configured to send a boot instruction to the smart television if the smart television is in the standby status, in which the boot instruction is configured to control the smart television to switch to the power-on status from the standby status; and a second sending unit, configured to transmit the playing instruction to the smart television, in which the playing instruction comprises a playing time and a playing source.

According to a seventh aspect of embodiments of the present disclosure, a remote control apparatus for a smart television is provided, including: a processor; a memory configured to store an executable instruction by the processor, in which the processor is configured to: obtain a playing task customized by a user, in which the playing task comprises at least a playing source; determine the smart television corresponding to the playing task; and obtain a playing instruction corresponding to the playing task and send the playing instruction to the smart television, in which the playing instruction is configured to control the smart television to obtain a source file corresponding to the playing source and to play the source file.

According to an eighth aspect of embodiments of the present disclosure, a remote control apparatus for a smart television is provided, including: a processor; a memory configured to store an executable instruction by the processor, in which the processor is configured to receive a playing instruction generated by a server according to an obtained playing task, in which the playing instruction comprises a playing source; obtain a source file corresponding to the playing source according to the playing instruction; and play the source file.

According to a ninth aspect of embodiments of the present disclosure, a remote control apparatus for a smart television is provided, including: a processor; a memory configured to store an executable instruction by the processor, in which the processor is configured to receive a playing instruction from a server; determine whether the smart television is in a power-on status or a standby status; send a boot instruction to the smart television if the smart television is in the standby status, in which the boot instruction is configured to control the smart television to switch to the power-on status from the standby status; and transmit the playing instruction to the smart television, in which the playing instruction comprises a playing time and a playing source.

The technical solutions provided by embodiments of the present disclosure have following advantageous effects. The playing task customized by the user is obtained via the server and the playing task includes at least the playing source. And then the server obtains the playing instruction corresponding to the playing task and sends the playing instruction to the smart television corresponding to the playing task. The smart television obtains the source file corresponding to the playing source after receiving the playing instruction and plays the source file. Finally, the user can control the smart television to play a predetermined program at a predetermined time remotely.

It should be understood that above general descriptions and following detailed descriptions are just exemplary and shall not limit the present disclosure.

### BRIEF DESCRIPTION OF THE DRAWINGS

The drawings showing embodiments in coincidence with the present disclosure are incorporated into the specification to serve as a part thereof and are configured to interpret a principle of the present disclosure together with the specification.
Fig. 1 is a flow chart of a remote control method according to an embodiment of the present disclosure;
Fig. 2 is a flow chart of step S12 in Fig. 1 according to an embodiment of the present disclosure;
Fig. 3 is a flow chart of step S13 in Fig. 1 according to an embodiment of the present disclosure;
Fig. 4 is a schematic diagram of an operation interface of a smart terminal according to an embodiment of the present disclosure;
Fig. 5 is a flow chart of step S13 in Fig. 1 according to another embodiment of the present disclosure;
Fig. 6 is a flow chart of a remote control method for a smart television according to an embodiment of the present disclosure;
Fig. 7 is a flow chart of a remote control method for a smart television according to another embodiment of the present disclosure;
Fig. 8 is a flow chart of a remote control method for a smart television according to another embodiment of the present disclosure;
Fig. 9 is a flow chart of a remote control method for a smart television according to another embodiment of the present disclosure;
Fig. 10 is a flow chart of a remote control method for a smart television according to an embodiment of the present disclosure;
Fig. 11 is a schematic diagram of a remote control apparatus for a smart television according to an embodiment of the present disclosure;
Fig.12 is a schematic diagram of a remote control apparatus for a smart television according to an embodiment of the present disclosure;
Fig. 13 is a schematic diagram of a remote control apparatus for a smart television according to another embodiment of the present disclosure;
Fig. 14 is a schematic diagram of a remote control apparatus for a smart television according to another embodiment of the present disclosure;
Fig. 15 is a schematic diagram of a remote control apparatus for a smart television according to another embodiment of the present disclosure;
Fig. 16 is a schematic diagram of a remote control apparatus for a smart television according to an embodiment of the present disclosure;
Fig. 17 is a schematic diagram of a server according to an embodiment of the present disclosure.

With above drawings, embodiments disclosed by the present disclosure have been presented and detailed descriptions will be provided in the following. These drawings are not intended to limit a scope of the present disclosure in any way, but to interpret an idea of the present disclosure for those skilled in the related art by referring to particular embodiments.

### DETAILED DESCRIPTION

Embodiments of the present disclosure provide a remote control method for a smart television. A playing task customized by a user is obtained via a server and the playing task includes at least a playing source. And then the server obtains a playing instruction corresponding to the playing task and sends the playing instruction to the smart television corresponding to the playing task. The smart television obtains a source file corresponding to the playing source after receiving the playing instruction and plays the source file. Finally, the user can control the smart television to play a predetermined program at a predetermined time remotely.

The above is an essential idea of the present disclosure. In order to understand the present disclosure better for those shilled in the related art, the present disclosure will be further described in the following with reference to drawings.

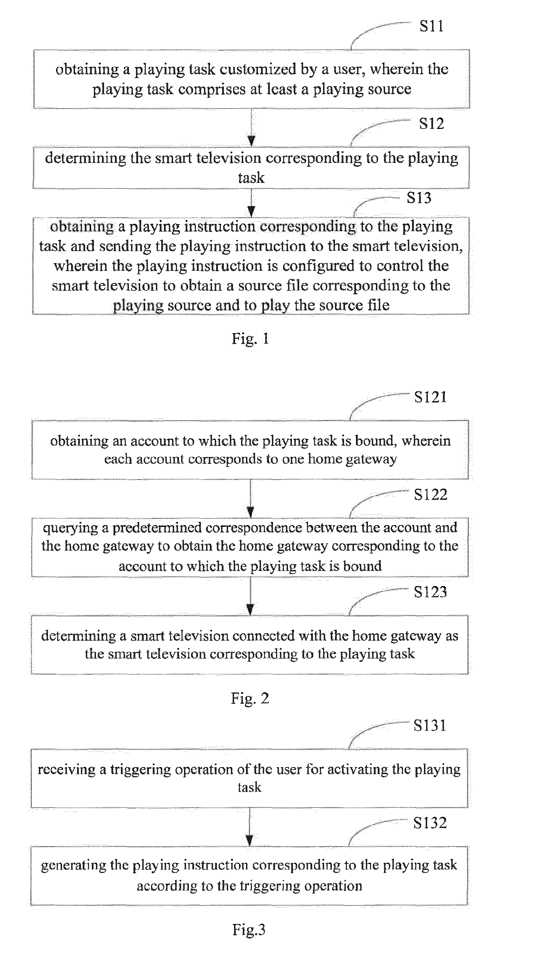

Fig. 1 is a flow chart of a remote control method for a smart television according to an embodiment of the present disclosure. As shown in Fig. 1, the method is used in a server and includes following steps.

At step S11, a playing task customized by a user is obtained, and the playing task includes at least a playing source.

The user may browse a program (such as a program played in a television channel synchronously or a requested program in the server) that can be played in a server via a smart terminal (such as a smartphone and a tablet PC) or a webpage to obtain a selected program, and customize the playing task according to the selected program. The playing task includes at least a memory address or a link corresponding to the selected program.

The server stores the playing tasks customized by all the users, and thus it is required for the user to login on the server with an account firstly, such that each playing task in a playing task database in the server can be bound to a corresponding account.

The playing task may be stored in a list which includes the account of the user, the playing source, the playing time, a playing duration and an automatic mode/a manual mode. The playing duration may be a concrete time (such as one hour) or an episode (such as one episode). In addition, all of the playing time, the playing duration and the automatic mode/the manual mode are optional.

The list may be in a form shown in Table 1.

**Table 1**

| Account of the user | Playing source | Playing time (optional) | Playing duration (optional) | Automatic mode/manual mode (optional) |
|---|---|---|---|---|
| Asdf123 | Source 1 | 14:00 | 1hor1 episode | Automatic mode |
| Axhfkll | Source2 | 10:00am | 2h or 2 episodes | Automatic mode |
| Cnjfghjl | Source3 | *** | 2h | Automatic mode |

At step S12, the smart television corresponding to the playing task is determined.

The playing task corresponds to the account used by the user to customize the playing task and the account corresponds to a smart television, and thus the smart television and the playing task can be associated with each other by the account.

In an embodiment of the present disclosure, the smart television is connected to the server via a home gateway. As shown in Fig. 2, step S12 includes following steps.

At step S121, the account to which the playing task is bound is obtained, and each account corresponds to one home gateway.

When the user selects the program in the server via the smart terminal or the webpage, it is required for the user to login with his account, such that the customized playing task corresponds to the account. Each smart television is connected to the server via the home gateway, and the home gateway is bound to the account. When the home gateway is connected to the server, it is needed to report the account to which the home gateway is bound to the server. In this way, each smart television is bound to one account. The smart television is associated with the playing task by the account.

At step S122, a predetermined correspondence between the account and the home gateway is queried to obtain the home gateway corresponding to the account to which the playing task is bound.

The correspondence between the account and the home gateway may be a correspondence between the account and a device number of the home gateway, which may be stored in a table as shown in Table 2.

**Table 2**

| Account | Device number of the home gateway |
|---|---|
| Asdf123 | 1234567 |
| Axhfkll | 8764900 |
| Cnjfghjl | 2684957 |

At step S123, a smart television connected with the home gateway is determined as the smart television corresponding to the playing task.

Each home gateway is connected with one smart television. Thus, after the home gateway is determined via the account to which the playing task is bound, the smart television connected with the home gateway is the smart television corresponding to the playing task.

At step S 13, a playing instruction corresponding to the playing task is obtained and the playing instruction is sent to the smart television, in which the playing instruction is configured to control the smart television to obtain a source file corresponding to the playing source and to play the source file.

A long connection is needed for a communication between the server and the smart television. The long connection may be implemented by the home gateway and the home gateway may be implemented by a set top box or an intelligent router.

An activation mode of the playing task may be the automatic mode or the manual mode. In the automatic mode, it is needed to set the playing time in the playing task. In this way, the server performs a timing management on the playing task, and generates the corresponding playing instruction according to the playing task when the playing time expires and sends the playing instruction to the smart television. In the manual mode, the user activates the playing task via the smart terminal or the webpage. At this time, the server generates the corresponding playing instruction according to the playing task and sends the playing instruction to the smart television. The smart television obtains the source file corresponding to the playing source after receiving the playing instruction and plays the source file.

In an embodiment of the present disclosure, the user may activate the customized playing manually. As shown in Fig. 3, step S 13 includes following steps S 131-S 132.

At step S131, a triggering operation of the user for activating the playing task is received.

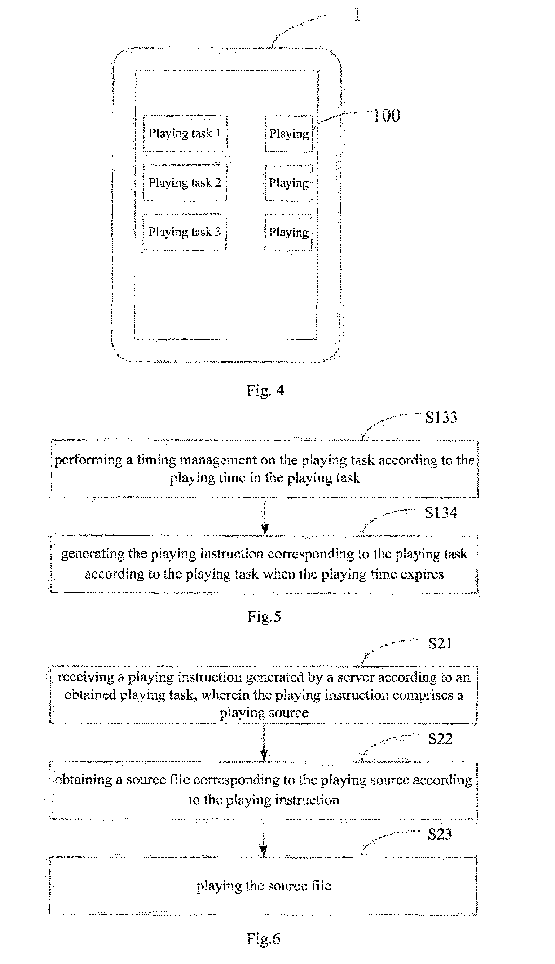

The user activates the playing task via a corresponding application or the webpage in terminal 1. An operation interface of the smart terminal may be an interface shown in Fig. 4, the list of playing tasks and corresponding "playing" buttons 100 are displayed in the operation interface, and when the user triggers the "playing" button 100 corresponding to the selected playing task, the playing task is activated. A column in which the playing task is may further include a program name of the selected program corresponding to the playing task.

At step S 132, the playing instruction corresponding to the playing task is generated according to the triggering operation.

After receiving the triggering operation, the server generates the playing instruction according to the playing task. The playing instruction is configured to control the smart television to obtain the source file corresponding to the playing source in the playing task and to play the source file.

In a possible embodiment of the present disclosure, the playing source includes the playing time and the playing source, and the server activates the playing task automatically. As shown in Fig. 5, step S13 further includes steps S133-S134.

At step S13, the timing management is performed on the playing task according to the playing time in the playing task.

When obtaining the playing task customized by the user, the server starts timing. When the playing time expires, the playing task is activated automatically by the server.

For example, the playing time is 10:00am, and a time when the server obtains the playing task (i.e., the playing task customized by the user) is supposed to be 8:00am. After obtaining the playing task, the server calculates an internal length between a current time and the playing time and then starts timing. When the internal length expires, the server activates the playing task.

Or, after obtaining the playing task, the server treats the playing time as a predetermined time and determines whether the current time reaches the predetermined time. If the current time reaches the predetermined time, the server activates the playing task.

A step S 134, the playing instruction corresponding to the playing task is generated according to the playing task when the playing time expires.

When the playing time expires, the playing instruction is generated according to the playing task. The playing instruction is configured to control the smart television to obtain the source file corresponding to the playing source and to play the source file.

For example, the playing instruction may be: "time: 10:00am, action: playing, displayName: movie "XXXX", source=movie: //xiaomi/sourceid=10001". The playing instruction indicates that the playing time is 10:00am; the action is playing; the display name is movie "XXXX"; the source address is "xiaomi/sourceid=10001".

With the remote control method for the smart television, the playing task customized by the user is obtained via the server and the playing task includes at least the playing source. And then the server obtains the playing instruction corresponding to the playing task and sends the playing instruction to the smart television corresponding to the playing task. The smart television obtains the source file corresponding to the playing source after receiving the playing instruction and plays the source file. Finally, the user can control the smart television to play a predetermined program at a predetermined time remotely.

Corresponding to above embodiments of the remote control method for the smart television used in the server, embodiments of a remote control method for a smart television used in the smart television are also provided herein.

Fig. 6 is a flow chart of a remote control method for a smart television according to an embodiment of the present disclosure. As shown in Fig. 6, the method includes following steps.

At step S21, the playing instruction generated by the server is received according to the obtained playing task, in which the playing instruction includes a playing source.

The server generates the playing instruction according to the playing task customized by the user, and finds the home gateway corresponding to the account according to the account to which the playing instruction is bound and sends the playing instruction to the home gateway. The home gateway sends the playing instruction to the smart television.

At step S22, the source file corresponding to the playing source is obtained according to the playing instruction.

After receiving the playing instruction such as "time: 10:00am, action: playing, displayName: movie "XXXX", source=movie: //xiaomi/sourceid=10001", the smart television enters a playing program and the playing program obtains the source file corresponding to the playing source (source=movie: //xiaomi/sourceid=10001).

At step S23, the source file is played.

After obtaining the source file corresponding to the playing source in the playing instruction, the television plays the source file.

With the remote control method for the smart television according to embodiments of the present disclosure, the smart television receives the playing instruction generated by the server according to the playing task, obtains the source file corresponding to the playing source according to the playing source in the playing instruction and plays the source file. Therefore, the user can customize the playing task in the server to generate the corresponding playing instruction and to send the playing instruction to the smart television, and the smart television obtains the playing instruction and executes the playing instruction. Finally, the user can control the smart television to play the predetermined program at the predetermined time remotely.

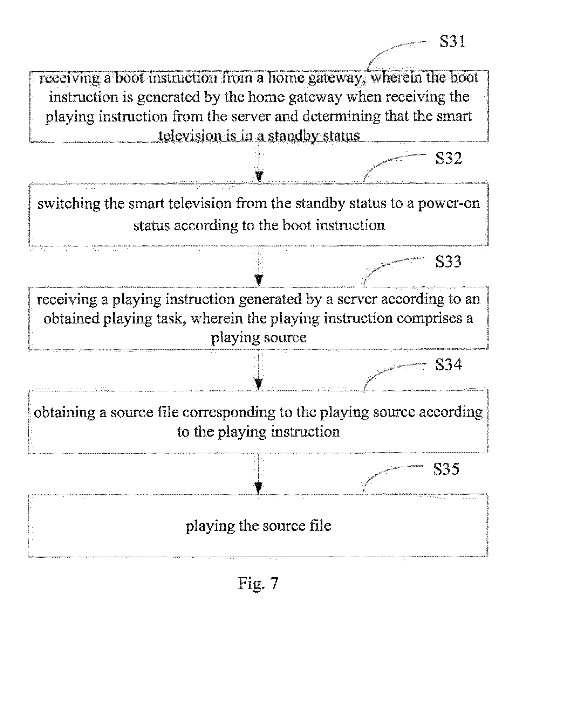

In order to play the predetermined program at the predetermined time by the remote control when the smart television is in a standby status, a flow chart of the remote control method for the smart television shown in Fig. 7 is provided by embodiments of the present disclosure, in which the method is used in the smart television. As shown in Fig. 7, the method includes following steps.

At step S31, a boot instruction from the home gateway is received, in which the boot instruction is generated by the home gateway when receiving the playing instruction from the server and determining that the smart television is in a standby status.

At step S32, the smart television is switched from the standby status to a power-on status according to the boot instruction.

The boot instruction may be a wireless signal such as an infrared signal or a Bluetooth signal for controlling the smart television to start. After receiving the boot instruction, the smart television is switched from the standby status to the power-on status. The standby status of the smart television may be a status in which the smart television is turned off, but a wireless receiving module therein is in the standby status. In this way, the wireless receiving module receives a wireless control signal to control the status of the smart television.

At step S33, the playing instruction generated by the server according to the obtained playing task is received, in which the playing instruction includes the playing source.

At step S34, the source file corresponding to the playing source is obtained according to the playing instruction.

At step S35, the source file is played.

With the remote control method for the smart television according to embodiments of the present disclosure, the smart television in the standby status receives the boot instruction from the home gateway firstly, and is switched to the power-on status according to the boot instruction. Then, the smart television receives the playing instruction, obtains the source file corresponding to the playing source according to the playing instruction and plays the source file, and thus the smart television can be controlled to play the predetermined program at the predetermined time according to the remote control method, even when the smart television is in the standby status.

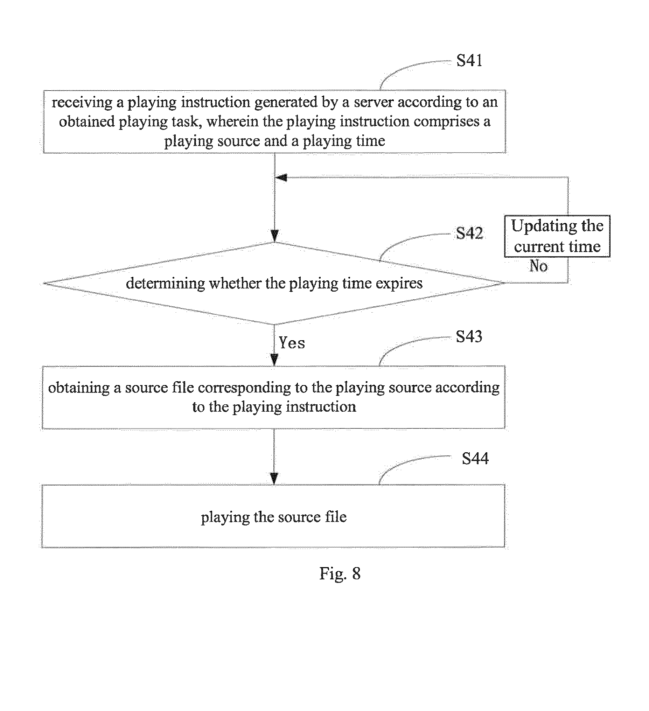

In an embodiment of the present disclosure, the smart television may perform the riming management on the playing instruction. As shown in Fig. 8, a flow chart of another remote control method for a smart television is provided, in which the method is used in the smart television. As shown in Fig. 8, the method includes following steps.

At step S41, the playing instruction generated by the server according to the obtained playing task is received, in which the playing instruction includes the playing source and the playing time.

After receiving the playing task customized by the user, the server generates the playing instruction, in which the playing instruction includes the playing source and the playing time. After receiving the playing instruction, the smart television performs the timing management on the playing instruction. The above condition is applicable to a scene in which the smart television is in the power-on status.

At step S42, it is determined whether the playing time expires. The smart television determines whether the playing time in the playing instruction is reached, which is similar to that at step S133 and is omitted herein.

If it is determined that the playing time is reached, step S43 is executed; if it is determined that the playing time has not been reached, the current time is updated, step S42 is then executed and it is further determined whether the updated current time reaches the playing time.

At step S43, the source file corresponding to the playing source is obtained according to the playing instruction if the playing time expires.

At step S44, the source file is played.

With the remote control method for the smart television according to embodiments of the present disclosure, which is applicable to the scene in which the smart television is turned on, the smart television performs the timing management on the playing instruction. If the playing time expires, the smart television obtains the source file corresponding to the playing source and plays the source file. In this way, it is not required for the server to perform the timing management on each playing task, thus reducing a burden of the server and decreasing a performance requirement of the server.

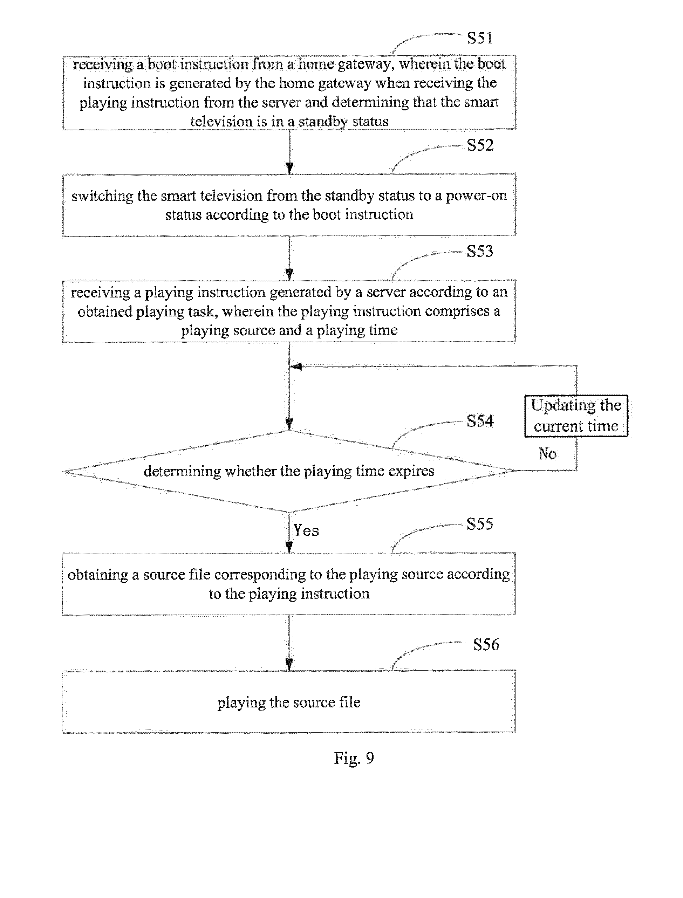

Fig. 9 is a flow chart of a remote control method for a smart television according to an embodiment of the present disclosure, in which the remote control method is used in the smart television. As shown in Fig. 9, the method includes following steps.

At step S51, the boot instruction from a home gateway is received, in which the boot instruction is generated by the home gateway when receiving the playing instruction from the server and determining that the smart television is in the standby status.

At step S52, the smart television is switched from the standby status to the power-on status according to the boot instruction.

At step S53, the playing instruction generated by the server according to the obtained playing task is received, in which the playing instruction includes the playing source and the playing time.

At step S54, it is determined whether the playing time expires. The smart television determines whether the playing time expires, which is similar to that at step S133 and is omitted herein.

At step S55, the source file corresponding to the playing source is obtained according to the playing instruction if the playing time expires.

According to the remote control method for the smart television according to embodiments of the present disclosure, the smart television is controlled to switch to the power-on status from the standby status to receive the playing instruction generated via the home gateway. Then, the smart television performs the timing management on the playing instruction. If the playing time expires, the smart television obtains the source file corresponding to the playing source and plays the source file, and thus the smart television can be controlled to play the predetermined program at the predetermined time according to the remote control method, even when the smart television is in the standby status. Also, since the smart television performs the timing management on the playing instruction, the burden of the server is reduced and the performance requirement of the server is decreased.

Corresponding to the remote control method for the smart television used in the smart television, a remote control method for a smart television used in the home gateway is provided by embodiments of the preset disclosure.

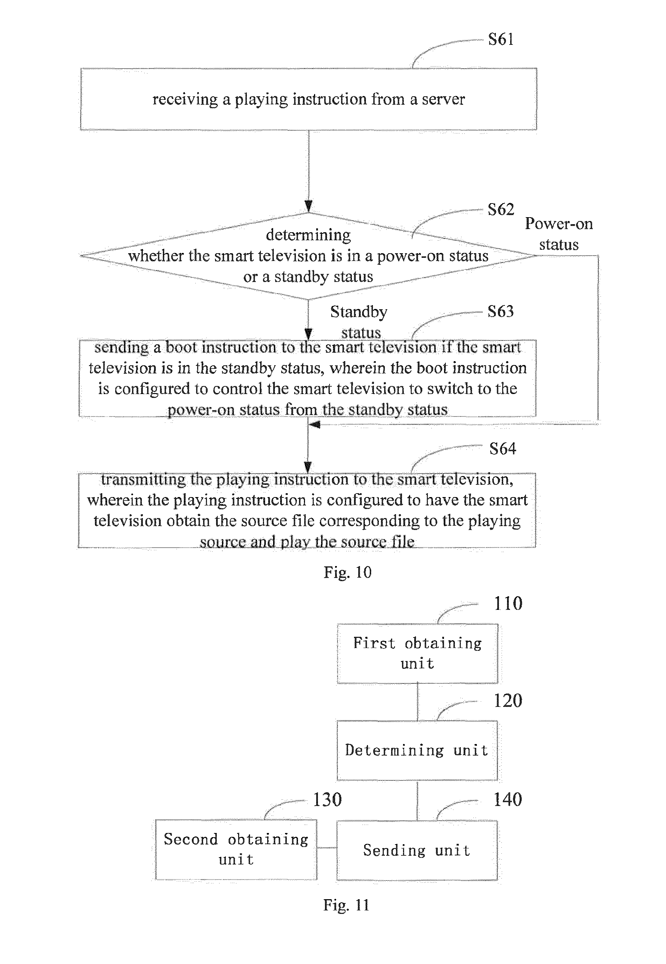

Fig. 10 is flow chart of another remote control method for a smart television according to embodiments of the present disclosure, in which the method is used in the home gateway. As shown in Fig. 10, the method includes following steps.

At step S61, the playing instruction from the server is received. The playing instruction includes at least the playing source.

In other embodiments of the present disclosure, the playing instruction may further include the playing time, the action, the display name and the playing source.

At step S62, it is determined whether the smart television is in the power-on status or the standby status.

The home gateway can determine whether the smart television is in the power-on status or the standby status by sending a testing signal to the smart television. If it is determined that the smart television is in the standby status, step S63 is executed; if it is determined that the smart television is in the power-on status, step S64 is executed.

At step S63, the boot instruction is sent to the smart television if the smart television is in the standby status, in which the boot instruction is configured to control the smart television to switch to the power-on status from the standby status.

At step S64, the playing instruction is transmitted to the smart television, in which the playing instruction includes the playing time and the playing source.

With the remote control method for the smart television according to embodiments of the present disclosure, which is used in the home gateway, if the home gateway detects the smart television is in the standby status, the smart television is controlled to switch to the power-on status. Then the home gateway sends the playing instruction sent from the sever to the smart television, such that the smart television obtains the source file corresponding to the playing source according to the playing instruction and plays the source file, and thus the smart television can be controlled to play the predetermined program at the predetermined time via the remote control method, even when the smart television is in the standby status.

Corresponding to the remote control method for the smart television according to above embodiments of the present disclosure, a remote control apparatus for a smart television is further provided by embodiments of the present disclosure.

Fig. 11 is a schematic diagram of a remote control apparatus for a smart television according to an embodiment of the present disclosure, in which the apparatus is used in a server. As shown in Fig. 11, the apparatus includes: a first obtaining unit 110, a determining unit 120, a second obtaining unit 130 and a sending unit 140.

The first obtaining unit 110 is configured to obtain the playing task customized by the user, in which the playing task includes at least the playing source.

The determining unit 120 is configured to determine the smart television corresponding to the playing task.

In an embodiment of the present disclosure, the smart television is connected to the server via the home gateway and the determining unit 120 includes a first obtaining sub-unit, a querying sub-unit and a first determining sub-unit.

The first obtaining sub-unit is configured to obtain the account to which the playing task is bound, in which each account corresponds to one home gateway.

The querying sub-unit is configured to query the predetermined correspondence between the account and the home gateway to obtain the home gateway corresponding to the account to which the playing task is bound.

The first determining sub-unit is configured to determine the smart television connected with the home gateway as the smart television corresponding to the playing task.

The second obtaining unit 130 is configured to obtain the playing instruction corresponding to the playing task.

In an embodiment of the present disclosure, the second obtaining unit includes: a receiving sub-unit and a first instruction generating sub-unit.

The receiving sub-unit is configured to receive the triggering operation of the user for activating the playing task.

The first instruction generating sub-unit is configured to generate the playing instruction corresponding to the playing task according to the triggering operation.

The sending unit 140 is configured to send the playing instruction to the smart television, in which the playing instruction is configured to control the smart television to obtain the source file corresponding to the playing source and to play the source file.

In an embodiment of the present disclosure, the playing task includes the playing time and the playing source, i.e., the playing task is in the automatic mode and the server activates the playing task according to the playing time automatically. At this time, the second obtaining unit 130 includes a timing sub-unit and a second instruction generating sub-unit.

The timing sub-unit is configured to perform the timing management on the playing task according to the playing time in the playing task.

The second instruction generating sub-unit is configured to generate the playing instruction corresponding to the playing task according to the playing task when the playing time expires.

With the remote control method for the smart television according to embodiments of the present disclosure, the first obtaining unit obtains the playing task customized by the user, in which the playing task includes at least the playing source. Then, the determining unit determines the smart television corresponding to the playing task. After the second obtaining unit obtains the playing instruction corresponding to the playing task, the sending unit sends the playing instruction to the smart television. After receiving the playing instruction, the smart television obtains the source file corresponding to the playing source and to play the source file. Finally, the smart television is controlled to play the predetermined program at the predetermined time.

Corresponding to the remote control apparatus for the smart television used in the server, a remote control apparatus for a smart television used in the smart television is further provided by embodiments of the present disclosure.

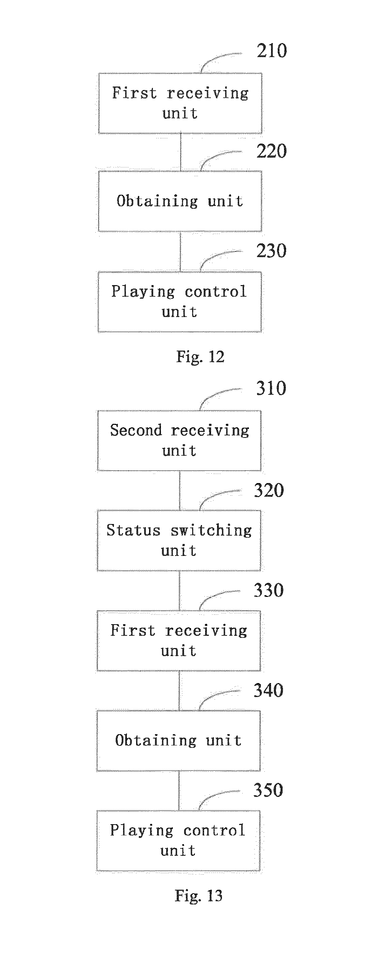

Fig. 12 is a schematic diagram of a remote control apparatus for a smart television according to an embodiment of the present disclosure, in which the apparatus is used in the smart television. As shown in Fig. 12, the apparatus includes: a first receiving unit 210, an obtaining unit 220 and a playing control unit 230.

The first receiving unit 210 is configured to receive the playing instruction generated by the server according to the obtained playing task, in which the playing instruction includes the playing source.

The obtaining unit 220 is configured to obtain the source file corresponding to the playing source according to the playing instruction.

The playing control unit 230 is configured to play the source file.

With the remote control apparatus for the smart television, the first receiving unit receives the playing instruction generated by the server according to the obtained playing task, and the obtaining unit obtains the source file corresponding to the playing source according to the playing instruction and the playing control unit plays the source file. In this way, the user customizes the playing task in the server to generate the corresponding playing instruction and to send the playing instruction to the smart television. The smart television obtains the playing instruction and executes the instruction. Finally, the user controls the smart television to play the predetermined program at the predetermined time remotely.

Fig. 13 is a schematic diagram of a remote control apparatus for a smart television according to another embodiment of the present disclosure. The apparatus is used in the smart television. As shown in Fig. 13, the apparatus includes a second receiving unit 310, a status switching unit 320, a first receiving unit 330, an obtaining unit 330 and a playing control unit 350.

The second receiving unit 310 is configured to receive the boot instruction from the home gateway, in which the boot instruction is generated by the home gateway when receiving the playing instruction from the server and determining that the smart television is in a standby status.

The status switching unit 320 is configured to switch the smart television from the standby status to the power-on status according to the boot instruction.

The first receiving unit 330 is configured to receive the playing instruction generated by the server according to the obtained playing task, in which the playing instruction includes the playing source.

The obtaining unit 340 is configured to obtain the source file corresponding to the playing source according to the playing instruction.

The playing control unit 350 is configured to play the source file.

With the remote control apparatus for the smart television according to embodiments of the present disclosure, the smart television in the standby status receives the boot instruction from the home gateway via the second receiving unit. Then, the status switching unit switches the smart television to the power-on status according to the boot instruction. The smart television receives the playing instruction, obtains the source file corresponding to the playing source according to the playing instruction and plays the source file, and thus the smart television can be controlled to play the predetermined program at the predetermined time via the remote control method, even when the smart television is in the standby status.

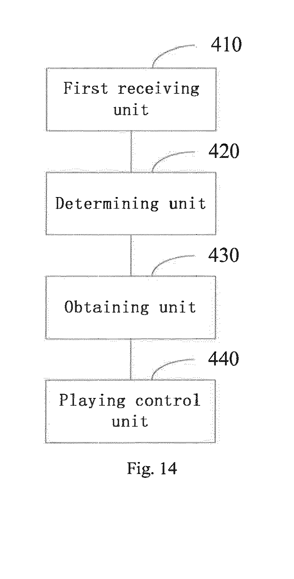

Fig. 14 is a schematic diagram of a remote control apparatus according to another embodiment of the present disclosure, in which he apparatus is used in the smart television. As shown in Fig. 14, the apparatus includes: a first receiving unit 410, a determining unit 420, an obtaining unit 430 and a playing control unit 440.

The first receiving unit 410 is configured to receive the playing instruction generated by the server according to the obtained playing task, in which the playing instruction includes the playing source.

The determining unit 420 is configured to determine whether the playing time expires.

The obtaining unit 430 is configured to obtain the source file corresponding to the playing source according to the playing instruction if the playing time expires.

The playing control unit 440 is configured to play the source file.

With the remote control apparatus for the smart television according to embodiments of the present disclosure, which is applicable to a scene in which the smart television is turned on, the smart television performs the timing management on the playing instruction. If the determining unit determines the playing time expires, the smart television obtains the source file corresponding to the playing source and plays the source file. In this way, it is not required for the server to perform the timing management on each playing task, thus reducing the burden of the server and decreasing the performance requirement of the server.

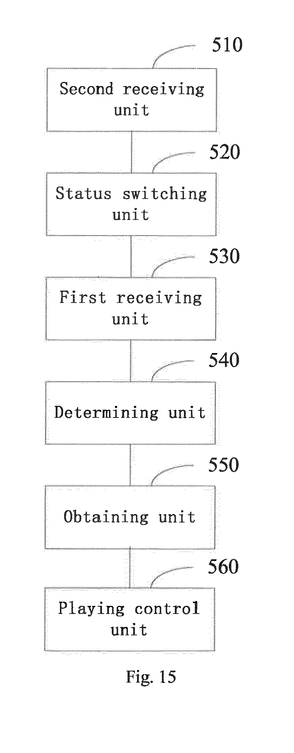

Fig. 15 is a schematic diagram of a remote control apparatus for a smart television according to another embodiment of the present disclosure, in which he apparatus is used in the smart television. As shown in Fig. 15, the apparatus includes: a second receiving unit 510, a status switching unit 520, a first receiving unit 530, a determining unit 540, an obtaining unit 550 and a playing control unit 560.

The second receiving unit 510 is configured to receive the boot instruction from the home gateway, in which the boot instruction is generated by the home gateway when receiving the playing instruction from the server and determining that the smart television is in the standby status.

The status switching unit 520 is configured to switch the smart television from the standby status to the power-on status according to the boot instruction.

The first receiving unit 530 is configured to receive the playing instruction generated by the server according to the obtained playing task, in which the playing instruction includes the playing source.

The determining unit 540 is configured to determine whether the playing time expires.

The obtaining unit 550 is configured to obtain the source file corresponding to the playing source according to the playing instruction if the playing time expires.

The playing control unit 560 is configured to play the source file.

With the remote control apparatus for the smart television according to embodiments of the present disclosure, the smart television is controlled to switch from the standby status to the power-on status via the home gateway to receive the playing instruction generated by the server. Then, the smart television performs the timing management on the playing instruction. If the playing time expires, the smart television obtains the source file corresponding to the playing source and plays the source file, and thus the smart television can be controlled to play the predetermined program at the predetermined time according to the remote control method, even when the smart television is in the standby status. Also, since the smart television performs the timing management on the playing instruction, the burden of the server is reduced and the performance requirement of the server is decreased.

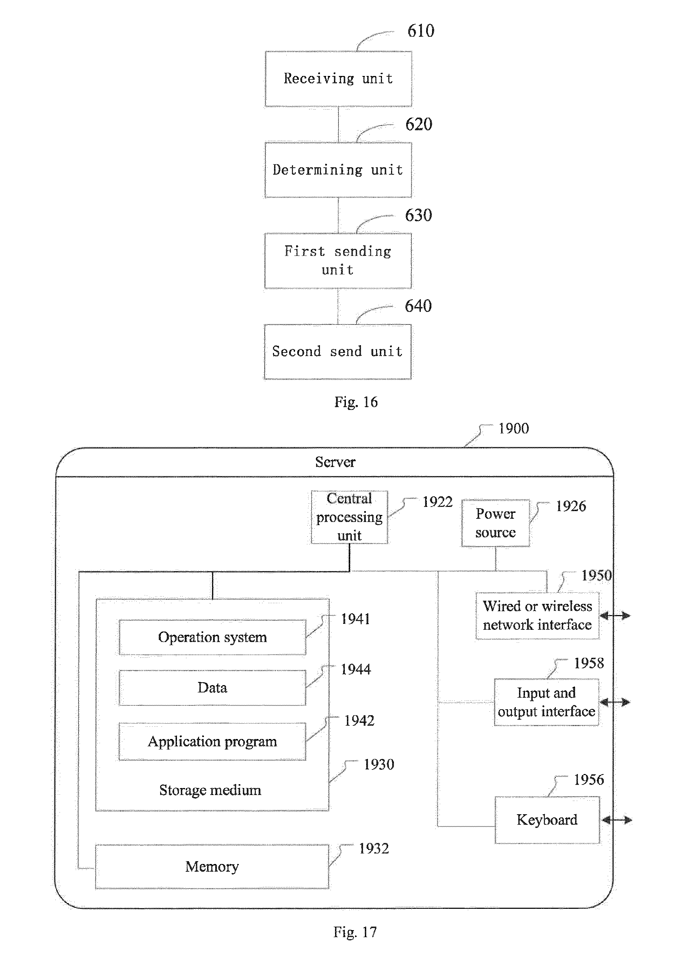

Fig. 16 is a schematic diagram of a remote control apparatus for a smart television according to an embodiment of the present disclosure, in which the apparatus is used in the home gateway. As shown in Fig. 16, the apparatus includes: a receiving unit 610, a determining unit 620, a first sending unit 630 and a second sending unit 640.

The receiving unit 610 is configured to receive the playing instruction from the server.

The determining unit 620 is configured to determine whether the smart television is in the power-on status or the standby status.

The first sending unit 630 is configured to send the boot instruction to the smart television if the smart television is in the standby status, in which the boot instruction is configured to control the smart television to switch to the power-on status from the standby status.

The second sending unit 640 is configured to transmit the playing instruction to the smart television, in which the playing instruction includes the playing time and the playing source.

The remote control apparatus for the smart television according to embodiments of the present disclosure is used in the home gateway. When detecting that the smart television is in the standby status, the home gateway controls the smart television to switch to the power-on status. Then, the home gateway sends the playing instruction sent from the server to the smart television, such that the smart television can obtain the source file corresponding to the playing source according to the playing instruction and play the source file, and thus the smart television can be controlled to play the predetermined program at the predetermined time via the remote control method, even when the smart television is in the standby status.

As for the apparatus in above embodiments, a mode of each unit to perform operations has been described in the embodiments of the related method in details and is omitted herein.

Fig. 17 is a schematic diagram of a server according to an embodiment of the present disclosure. The server 1990 may be varied due to different configurations or performances and may include one or more central processing units 1922 (such as one or more processors) and a memory 1932, one or more storage application programs 1942 or storage medium 1930 (such as one or more mass storage devices) of data 1944. The memory 1932 and the storage medium 1930 may have a temporary storage or a persistent storage. A program stored in the storage medium 1930 includes one or more modules (not shown), and each module includes a series of instruction operations for the server. Furthermore, the central processing unit 1920 is configured to communicate with the storage medium 1930 and to execute the series of instruction operations in the storage medium 1930 in the server 1900.

The server 1900 may further include one or more power sources 1926, one or more wired or wireless network interfaces 1950, one or more input and output interfaces 1958, one or more keyboards 1956, and/or, one or more operating systems 1941, such as Windows ServerTM, Mac OS XTM, UnixTM, LinuxTM and FreeBSDTM.

A non-transit computer-readable storage medium is provided by embodiments of the present disclosure. When instructions in the storage medium are executed by the processor, the remote control method for the smart television can be performed by the server. The method includes following steps.

The playing task customized by the user is obtained, in which the playing task includes at least the playing source. The smart television corresponding to the playing task is determined. The playing instruction corresponding to the playing task is obtained and the playing instruction is sent to the smart television, in which the playing instruction is configured to control the smart television to obtain the source file corresponding to the playing source and to play the source file.

Alternatively, the playing instruction corresponding to the playing task is obtained by receiving the triggering operation of the user for activating the playing task and generating the playing instruction corresponding to the playing task according to the triggering operation.

Alternatively, the playing task includes the playing time and the playing source, and the playing instruction corresponding to the playing task is obtained by performing the timing management on the playing task according to the playing time in the playing task and generating the playing instruction corresponding to the playing task according to the playing task when the playing time expires.

Alternatively, the smart television is connected to the server via the home gateway and the smart television corresponding to the playing task is determined by obtaining the account to which the playing task is bound, in which each account corresponds to one home gateway, querying the predetermined correspondence between the account and the home gateway to obtain the home gateway corresponding to the account to which the playing task is bound and determining the smart television connected with the home gateway as the smart television corresponding to the playing task.

On another hand, a terminal apparatus is provided by embodiments of the present disclosure. The terminal apparatus includes: a processor and a memory configured to store an executable instruction by the processor, in which the processor is configured to receive a playing instruction generated by a server according to an obtained playing task, in which the playing instruction includes a playing source, to obtain a source file corresponding to the playing source according to the playing instruction and to play the source file.

On another hand, a terminal apparatus is provided by embodiments of the present disclosure. The terminal apparatus includes: a processor and a memory configured to store an executable instruction by the processor, in which the processor is configured to receive the playing instruction from the server, to determine whether the smart television is in the power-on status or the standby status, to send the boot instruction to the smart television if the smart television is in the standby status, in which the boot instruction is configured to control the smart television to switch to the power-on status from the standby status, and to transmit the playing instruction to the smart television, in which the playing instruction includes the playing time and the playing source.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

It should be noted relational terms herein such as "first" and "second" are just intended to distinguish an entity or operation from another entity or operation, but not to imply any relationship or sequence between these entities or operations. Moreover, terms such as "include", "comprise" or other variants are intended to cover a non-exclusive meaning, such that the process, method, object or apparatus including a series of elements may further include other elements which are not outlined definitely or include inherent elements of the process, method, object or apparatus. Unless specified otherwise, an element limited by a sentence "comprises a/an..." does not rule out the possibility that the process, method, object or apparatus including the element may further include other identical elements.

The above are only embodiments of the present disclosure and are intended to help those skilled in the related art to understand or implement the present disclosure. Various modifications of those embodiments are apparent for those skilled in the related art and the general principle defined herein may be performed in other embodiments. Therefore, the present disclosure will not be limited to those embodiments herein, but claim the widest scope in conformance with the principle and novel characteristics of the present disclosure.

Embodiments of the invention can be described with reference to the following numbered clauses, with preferred features laid out in the dependent clauses:
1. A remote control apparatus for a smart television, comprising: a first obtaining unit (110), configured to obtain a playing task customized by a user, wherein the playing task comprises at least a playing source; a determining unit (120), configured to determine the smart television corresponding to the playing task; a second obtaining unit (130), configured to obtain a playing instruction corresponding to the playing task; and a sending unit (140), configured to send the playing instruction to the smart television, wherein the playing instruction is configured to control the smart television to obtain a source file corresponding to the playing source and to play the source file.
2. The apparatus according to clause 1, wherein the second obtaining unit (130) comprises: a receiving sub-unit, configured to receive a triggering operation of the user for activating the playing task; and a first instruction generating sub-unit, configured to generate the playing instruction corresponding to the playing task according to the triggering operation. The apparatus according to clause 1, wherein the playing task comprises a playing time and the playing source, and the second obtaining unit (130) comprises: a timing sub-unit, configured to perform a timing management on the playing task according to the playing time in the playing task; and a second instruction generating sub-unit, configured to generate the playing instruction corresponding to the playing task according to the playing task when the playing time expires.
3. The apparatus according to clause 1, wherein the smart television is connected to the server via a home gateway, and the determining unit (120) comprises: a first obtaining sub-unit, configured to obtain an account to which the playing task is bound, wherein each account corresponds to one home gateway; a querying sub-unit, configured to query a predetermined correspondence between the account and the home gateway to obtain the home gateway corresponding to the account to which the playing task is bound; and a first determining sub-unit, configured to determine a smart television connected with the home gateway as the smart television corresponding to the playing task.

## Claims

1. A remote control method for a smart television, comprising:
obtaining a playing task customized by a user, wherein the playing task comprises at least a playing source;
determining the smart television corresponding to the playing task; and
obtaining a playing instruction corresponding to the playing task and sending the playing instruction to the smart television, wherein the playing instruction is configured to control the smart television to obtain a source file corresponding to the playing source and to play the source file.

2. The method according to claim 1, wherein obtaining a playing instruction corresponding to the playing task comprises:
receiving a triggering operation of the user for activating the playing task; and
generating the playing instruction corresponding to the playing task according to the triggering operation.

3. The method according to claim 1, wherein the playing task comprises a playing time and the playing source; and obtaining a playing instruction corresponding to the playing task comprises:
performing a timing management on the playing task according to the playing time in the playing task; and
generating the playing instruction corresponding to the playing task according to the playing task when the playing time expires.

4. The method according to claim 1, wherein the smart television is connected to a server via a home gateway; and determining the smart television corresponding to the playing task comprises:
obtaining an account to which the playing task is bound, wherein each account corresponds to one home gateway;
querying a predetermined correspondence between the account and the home gateway to obtain the home gateway corresponding to the account to which the playing task is bound; and
determining a smart television connected with the home gateway as the smart television corresponding to the playing task.

5. A remote control method for a smart television, comprising:
receiving a playing instruction generated by a server according to an obtained playing task, wherein the playing instruction comprises a playing source;
obtaining a source file corresponding to the playing source according to the playing instruction; and
playing the source file.

6. The method according to claim 5, further comprising:
receiving a boot instruction from a home gateway, wherein the boot instruction is generated by the home gateway when receiving the playing instruction from the server and determining that the smart television is in a standby status; and
switching the smart television from the standby status to a power-on status according to the boot instruction.

7. The method according to claim 5 or 6, wherein the playing instruction comprises a playing time and the playing source, and the method further comprises:
determining whether the playing time expires;
executing a step of obtaining the source file corresponding to the playing source according to the playing instruction if the playing time expires.

8. A remote control method for a smart television, comprising:
receiving a playing instruction from a server;
determining whether the smart television is in a power-on status or a standby status;
sending a boot instruction to the smart television if the smart television is in the standby status, wherein the boot instruction is configured to control the smart television to switch to the power-on status from the standby status; and
transmitting the playing instruction to the smart television, wherein the playing instruction comprises a playing time and a playing source.

9. A remote control apparatus for a smart television, comprising:
a first obtaining unit (110), configured to obtain a playing task customized by a user, wherein the playing task comprises at least a playing source;
a determining unit (120), configured to determine the smart television corresponding to the playing task;
a second obtaining unit (130), configured to obtain a playing instruction corresponding to the playing task; and
a sending unit (140), configured to send the playing instruction to the smart television, wherein the playing instruction is configured to control the smart television to obtain a source file corresponding to the playing source and to play the source file.

10. A remote control apparatus for a smart television, comprising:
a first receiving unit (210, 330, 410, 530), configured to receive a playing instruction generated by a server according to an obtained playing task, wherein the playing instruction comprises a playing source;
an obtaining unit (220, 340, 430, 550), configured to obtain a source file corresponding to the playing source according to the playing instruction; and
a playing control unit (230, 350, 440, 560), configured to play the source file.

11. The apparatus according to claim 10, further comprising:
a second receiving unit (310, 510), configured to receive a boot instruction from a home gateway, wherein the boot instruction is generated by the home gateway when receiving the playing instruction from the server and determining that the smart television is in a standby status; and
a status switching unit (320, 520), configured to switch the smart television from the standby status to a power-on status according to the boot instruction.

12. The apparatus according to claim 10 or 11, further comprising:
a determining unit (420), configured to determine whether the playing time expires; and
the obtaining unit (220, 340, 430, 550) is configured to obtain the source file corresponding to the playing source according to the playing instruction if the playing time expires.

13. A remote control apparatus for a smart television, comprising:
a receiving unit (610), configured to receive a playing instruction from a server;
a determining unit (620), configured to determine whether the smart television is in a power-on status or a standby status;
a first sending unit (630), configured to send a boot instruction to the smart television if the smart television is in the standby status, wherein the boot instruction is configured to control the smart television to switch to the power-on status from the standby status; and
a second sending unit (640), configured to transmit the playing instruction to the smart television, wherein the playing instruction comprises a playing time and a playing source.

14. A server, comprising:
a processor;
a memory (1932) configured to store an executable instruction by the processor;
wherein the processor is configured to:
obtain a playing task customized by a user, wherein the playing task comprises at least a playing source;
determine the smart television corresponding to the playing task; and
obtain a playing instruction corresponding to the playing task and send the playing instruction to the smart television, wherein the playing instruction is configured to control the smart television to obtain a source file corresponding to the playing source and to play the source file.

15. A terminal apparatus, comprising:
a processor;
a memory (1932) configured to store an executable instruction by the processor;
wherein the processor is configured to execute stored instructions to perform the method of any of claims 1, 5 or 8.

16. A computer program, which when executing on a processor, performs a method according to any one of claims 1, 5 and 8.
